# EUROPÄISCHE PATENTSCHRIFT

(11) **EP 0 423 827 B1**
(45) Veröffentlichungstag und Bekanntmachung des Hinweises auf die Patenterteilung: **05.07.1995**
(21) Anmeldenummer: 90120134.3
(22) Anmeldetag: 19.10.1990
(51) Int. Cl.: C02F 1/48

(54) **Vorrichtung zur Aufbereitung von Flüssigkeiten, insbesondere von Wasser**
Magnetic treatment device, especially for water
Dispositif de traitement magnétique de liquides notamment de l'eau

(30) Priorität: 20.10.1989 DE 8912482 U; 06.04.1990 DE 9004033 U; 10.08.1990 DE 9011686 U
(43) Veröffentlichungstag der Anmeldung: 24.04.1991
(73) Patentinhaber: Bossert, Gerdi, D-78052 Villingen-Schwenningen (DE)
(72) Erfinder: Bossert, Karl, D - 7730 VS Villingen (DE)
(74) Vertreter: Liska, Horst, Dr.-Ing.

(56) Entgegenhaltungen:
- EP-A- 0 333 892
- DE-U- 8 904 085
- PATENT ABSTRACTS OF JAPAN, Band 04, Nr. 026, 6. März 1980;& JP-A-55 000 720 (SUZUKI MASONOBU) 04-01-1980

## Beschreibung

Die Erfindung betrifft eine Vorrichtung zur Aufbereitung von Flüssigkeiten, insbesondere von Wasser, bei welcher im Strömungsweg der Flüssigkeit in Strömungsrichtung aufeinanderfolgend mehrere Aufbereitungsgeräte angeordnet sind, von denen ein erstes Gerät die Flüssigkeit einem Magnetfeld aussetzt und in Strömungsrichtung insbesondere dahinter ein zweites Gerät die Flüssigkeit einem elektrischen Feld aussetzt.

Es ist bekannt, am Eingang eines beispielsweise wasserführenden Rohrleitungssystems zum Beispiel eines Gebäudes ein Filter einzuschalten, welches Schmutzpartikel und dergleichen zurückhält. Es ist ferner bekannt, dem Filter ein Magnetgerät nachzuschalten, welches das einen Durchflußraum des Magnetgeräts durchströmende Wasser einem magnetischen Gleich- oder Wechselfeld aussetzt. Das Magnetgerät mindert eine eventuelle Verkalkung des Rohrleitungssystems. Schließlich ist es bekannt, Verkalkungen des von Wasser durchströmten Rohrleitungssystems dadurch zu mindern, daß am Eingang des Rohrleitungssystems ein Gerät angeordnet wird, welches das Wasser einem elektrischen Gleichfeld aussetzt. Es hat sich aber gezeigt, daß solche das Wasser einem elektrischen Gleichfeld aussetzende Geräte einen vergleichsweise hohen Strombedarf haben und damit eine elektrolytische Zersetzung des Wassers bewirken oder aber hohe Spannungen benötigen. Geräte dieser Art werden deshalb zum Teil von Durchsatzfühlern gesteuert und nur bei Wasserentnahme eingeschaltet.

Zur Minderung von Verkrustungserscheinungen in flüssigkeitsführenden Systemen, insbesondere Verkalkungen bei wasserführenden Systemen, ist es aus "Patent Abstracts of Japan", Band 4, Nr. 026 bekannt, im Strömungsweg der Flüssigkeit sowohl ein die Flüssigkeit einem Magnetfeld aussetzendes erstes Gerät als auch ein die Flüssigkeit einem elektrischen Feld aussetzendes zweites Gerät anzuordnen. Die Aufbereitung der Flüssigkeit läßt sich auf diese Weise mit vergleichsweise geringem Strombedarf durchführen.

Es hat sich gezeigt, daß sich diese Vorteile insbesondere dann erreichen lassen, wenn die Flüssigkeit dem magnetischen Feld ausgesetzt wird, bevor sie zur Verkalkungsminderung das elektrische Feld durchläuft. Speziell hat sich überraschenderweise gezeigt, daß das Wasser seine spezifische Impedanz erhöht, mit der Folge, daß sich der in dem elektrischen Feld fließende Strom verringert. Wenngleich sich durch ein hinreichend hohes Magnetfeld allein die Gefahr der Verkalkung ebenfalls mindern läßt, so kann durch die Kombination eines die Flüssigkeit dem Magnetfeld aussetzenden Geräts mit einem die Flüssigkeit danach einem elektrischen Feld aussetzenden Gerät die Verkalkung bereits durch schwächere Magnetfelder gemindert werden. Während zur Erzeugung starker Magnetfelder normalerweise ein Elektromagnet erforderlich ist, können in Kombination mit einem die Flüssigkeit einem elektrischen Feld aussetzenden Gerät auch Permanentmagnete zur Magnetfelderzeugung eingesetzt werden.

Die Erfindung baut auf den zuletzt genannten Erkenntnissen auf, mit dem Ziel, eine Vorrichtung zur Aufbereitung von Flüssigkeiten zu schaffen, die mit vergleichsweise geringem Montageaufwand auskommt und vergleichsweise wenig Platzbedarf hat.

Unter einem ersten Aspekt der Erfindung wird dies dadurch erreicht, daß das die Flüssigkeit dem Magnetfeld aussetzende erste Gerät an seinem einen Ende eine Zuflußöffnung und an seinem anderen Ende eine Abflußöffnung aufweisendes Gehäuserohr umfaßt, in welchem mehrere in Achsrichtung des Gehäuserohrs in einer Reihe, insbesondere mit abwechselnder Polarität nebeneinanderliegende Permanentmagnete angeordnet sind, die zwischen sich oder zwischen sich und dem Gehäuserohr einen Durchflußraum bilden, daß auch das zweite, die Flüssigkeit dem elektrischen Feld aussetzende Gerät ein rohrförmiges, an seinem einen Ende eine Zuflußöffnung und an seinem anderen Ende eine Abflußöffnung aufweisendes Gehäuserohr aus Metall, koaxial in dem Gehäuserohr eine an Abstandisolatoren gehaltene, im wesentlichen stangenförmige Elektrode und eine mit dem Gehäuserohr und der Elektrode verbundene Spannungsquelle umfaßt und daß die Gehäuserohre des ersten und des zweiten Geräts achsparallel nebeneinander angeordnet sind und mit je einer Abflußöffnung und je einer Zuflußöffnung aneinander angeschlossen und zu einer Baueinheit verbunden sind. Eine solche Vorrichtung läßt sich besonders einfach aus einigen wenigen Gehäusebauteilen aufbauen, insbesondere wenn die Gehäusebauteile gleich ausgebildet sind. Die Zuflußöffnungen bzw. Abflußöffnungen sind vorzugsweise jeweils in Kappen vorgesehen, die auf die Gehäuserohre aufgeschraubt sind. Die Kappen der miteinander verbundenen Zufluß- bzw. Abflußöffnungen bilden zweckmäßigerweise gleichfalls eine Baueinheit. Die jeweils anderen Kappen sind gegenüber dem Gehäuserohr einzeln verdrehbar und vorzugsweise mit einer Kontermutter gesichert, so daß die Winkellage der Zufluß- bzw. Abflußöffnungen gegeneinander entsprechend der Einbausituation verdreht werden können.

In einer Alternative ist die erfindungsgemäße Vorrichtung dadurch gekennzeichnet, daß das erste Gerät einen rohrförmigen, an seinem einen Ende eine Zulauföffnung aufweisenden und an seinem anderen Ende geschlossenen Gehäusetopf, ein im wesentlichen gleichachsig in den Gehäusetopf hineinragendes und zusammen mit diesem einen Durchflußringraum bildendes Labyrinthrohr, welches der Zuflußöffnung benachbart eine Abflußöffnung bildet und axial gegenüberliegend zum Gehäusetopf geöffnet ist und mehrere innerhalb des Labyrinthrohrs in dessen Achsrichtung in einer Reihe mit abwechselnder Polarität angeordnete Permanentmagnete umfaßt, die zwischen sich und dem Labyrinthrohr einen zweiten Durchflußringraum bilden und daß das zweite Gerät ein rohrförmiges, an seinem einen Ende eine Zuflußöffnung und an seinem anderen Ende eine Abflußöffnung aufweisendes Gehäuserohr aus Metall, koaxial in dem Gehäuserohr eine an Abstandisolatoren gehaltene, im wesentlichen stangenförmige Elektrode und eine mit dem Gehäuserohr und der Elektrode verbundene Spannungsquelle umfaßt. Auch eine solche Vorrichtung läßt sich mit vergleichsweise geringem Konstruktionsaufwand herstellen. Insbesondere setzt das erste Gerät die Flüssigkeit auf einem vergleichsweise langen Weg dem Magnetfeld aus. Zweckmäßigerweise sind die Permanentmagnete in einem im wesentlichen gleichachsig zum Labyrinthrohr verlaufenden Schutzrohr angeordnet, so daß der zweite Durchflußringraum zwischen dem Schutzrohr und dem Labyrinthrohr verläuft. Das Schutzrohr dichtet die Magnete gegenüber der Flüssigkeit ab.

Bei dem die Flüssigkeit reinigenden Filter kann es sich um ein herkömmliches Schmutzpartikelfilter handeln, wobei zweckmäßigerweise in dem Durchflußgehäuse des Filters noch wenigstens ein Permanentmagnet angeordnet ist, der Eisenpartikel und dergleichen zurückhält. Ein solches Filter ist zweckmäßigerweise strömungsabwärts des Magnetgeräts angeordnet.

In einer bevorzugten Ausgestaltung sowohl des ersten als auch des zweiten Aspekts der Erfindung ist strömungsabwärts des ersten Geräts, d.h. des Magnetgeräts, ein als Filter ausgebildetes drittes Gerät angeordnet, welches die Flüssigkeit von darin enthaltenen Partikeln reinigt. Ein solches Filter hält die durch das Magnetgerät strukturell veränderte Verkalkung zurück und erlaubt es zum Beispiel bei wasserführenden Systemen den Härtegrad des Wassers einzustellen. Soweit das Magnetgerät in Reihe mit einem zweiten, die Flüssigkeit einem elektrischen Feld aussetzenden Gerät geschaltet ist, ist das Filter vorzugsweise strömungsabwärts der Hintereinanderschaltung angeordnet.

Es hat sich gezeigt, daß die Wirkung des elektrischen Felds auf die zu behandelnde Flüssigkeit dann besonders groß ist, wenn an die Elektrodenanordnung des Geräts ein elektrischer Impulsgenerator angeschlossen ist, der periodische Spannungsimpulse erzeugt. Die Impulsfolgefrequenz ist vorzugsweise größer als 1 KHz und insbesondere größer als 10 KHz. Auf diese Weise lassen sich nicht nur verkrustungsmindernde Ergebnisse erzielen, sondern auch zusätzliche Ergebnisse, wie zum Beispiel Wachstumsförderung von Pflanzen, die mit dem so behandelten Wasser gegossen werden. Bei den Spannungsimpulsen handelt es sich insbesondere um Wechselstromimpulse, um Elektrolyseerscheinungen der dem elektrischen Feld ausgesetzten Flüssigkeit möglichst gering zu halten.

Es hat sich gezeigt, daß sich die Wirkung des elektrischen Felds in Abhängigkeit von der Impulsfrequenz ändert. In einer bevorzugten Ausgestaltung sind deshalb mehrere der vorstehend erläuterten, die Flüssigkeit einem elektrischen Feld aussetzende Geräte in Strömungsrichtung hintereinander angeordnet, wobei die Impulsgeneratoren dieser Geräte jeweils voneinander abweichende Impulsfrequenzen haben. Zwischen den einzelnen die Flüssigkeit dem elektrischen Feld aussetzenden Geräten, können weitere Magnetgeräte angeordnet sein.

Vorrichtungen der vorstehend erläuterten Art reduzieren bei kalkhaltigem Wasser den Kalkansatz im nachfolgenden Rohrleitungssystem. Es hat sich gezeigt, daß die Wasserhärte von weichem, d.h. kalkarmem Wasser erhöht und die mit weichem Wasser verbundenen Korrosionsschäden vermieden werden können, wenn an den Ausgang der Vorrichtung ein Behälter angeschlossen ist, der im Strömungsweg des Wassers Kalkmaterial in schüttfähiger Form enthält. Aufgrund der durch insbesondere das Magnetgerät verbesserten Kalklöseeigenschaften des Wassers kann die Wasserhärte auf korrosionsmindernde Werte angehoben werden.

Im folgenden wird die Erfindung anhand einer Zeichnung näher erläutert. Hierbei zeigt:
- Fig. 1: eine schematische Schnittansicht durch einer Wasseraufbereitungsvorrichtung,
- Fig. 2: eine schematische Schnittansicht durch eine Variante einer Wasseraufbereitungsvorrichtung;
- Fig. 3: eine schematische Schnittansicht einer Variante der Vorrichtung aus Fig. 1 und
- Fig. 4: eine weitere Variante der Vorichtung.

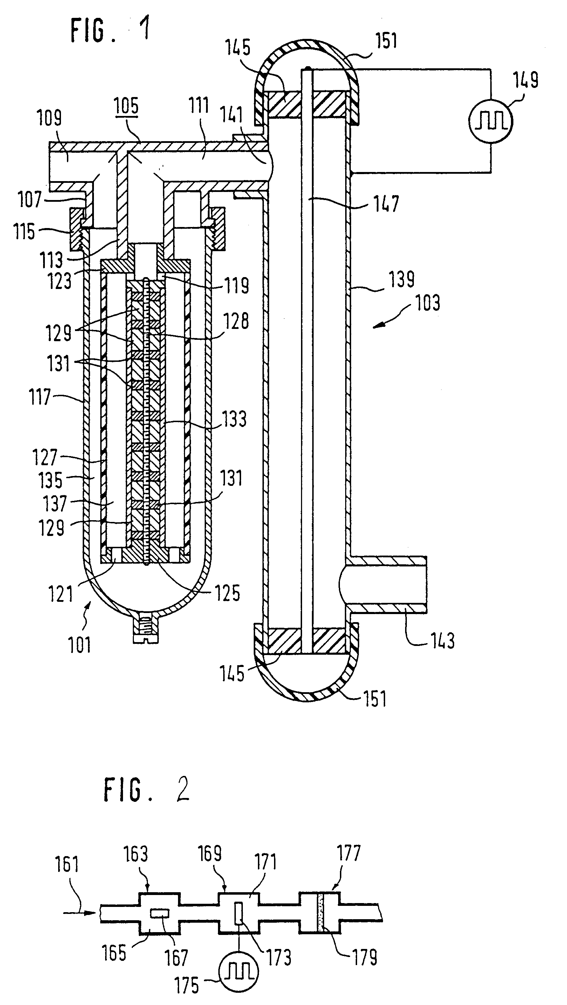

Fig. 1 zeigt eine Vorrichtung, die zur Aufbereitung von Wasser sowohl durch magnetische als auch elektrische Felder für die Minderung der Verkalkungsgefahr nachfolgender, wasserführender Systeme sowie zur biologischen Verbesserung des Wassers geeignet ist. Die Vorrichtung umfaßt ein das Wasser einem magnetischen Feld aussetzendes Magnetgerät 101, das zu einer Baueinheit mit einem im Strömungsweg des Wassers nachfolgenden, das Wasser einem elektrischen Feld aussetzenden Gerät 103 zu einer Baueinheit verbunden ist. Das Magnetgerät 101 hat einen Kopf 105 mit einem Rohransatz 107, in dem exzentrisch ein Einlaßkanal 109 mündet. Ein Auslaßkanal 111 des Kopfs 105 mündet in einem zum Rohransatz 107 koaxialen Rohrstutzen 113. An den Rohransatz 107 ist mit Hilfe einer Überwurfmutter 115 ein rohrförmiger Gehäusetopf 117 mit seiner offenen Seite angeschlossen. Der Rohrstutzen 113 trägt eingespannt zwischen zwei mit Öffnungen 119 bzw. 121 versehenen Stirnteilen 123, 125, ein aus nichtmagnetischem Material, beispielsweise Kunststoff, bestehendes Labyrinthrohr 127. Von einer Gewindestange 128 zwischen den beiden Stirnteilen 123, 125 eingespannt, sind in einer Reihe koaxial zu dem Gehäusetopf 117 und dem Labyrinthrohr 127 mehrere Permanentmagnete 129 angeordnet, zwischen welchen jeweils Polscheiben 131 aus ferromagnetischem Material angeordnet sind. Die Permanentmagnete 129 liegen mit jeweils gleicher Polarität an der dazwischen liegenden Polscheibe 131 an, so daß längs der Magnetreihe ein Magnetfeld wechselnder Polarität entsteht. Die Magnetanordnung ist von einem Schutzrohr 133, beispielsweise aus nichtrostendem Stahl, umschlossen und gegenüber den Stirnteilen 123, 125 abgedichtet. Das über den Eingangskanal 109 zufließende Wasser wird sowohl in einem Ringraum 135 zwischen dem Gehäusetopf 117 und dem Labyrinthrohr 127 als auch in einem zweiten Ringraum 137 zwischen dem Labyrinthrohr 127 und dem Schutzrohr 133 dem in Strömungsrichtung wechselnden Magnetfeld der Magnete 129 ausgesetzt, bevor es über den Ausgangskanal 111 das Magnetgerät 101 verläßt.

Das Gerät 103 hat ein aus Metall bestehendes Gehäuserohr 139, das im Bereich seines einen Endes über eine radiale Öffnung 141 an den Auslaßkanal 111 des Magnetgeräts 101 angeschlossen ist. Im Bereich des axial gegenüberliegenden Endes ist das Gehäuserohr 139 mit einem Ausgangsanschluß 143 versehen. Von Isolierscheiben 145 gehalten, erstreckt sich innerhalb des Gehäuserohrs 139 koaxial ein Elektrodenstab 147. An den Elektrodenstab 147 und das Gehäuserohr 139 ist ein Wechselstrom-Impulsgenerator 149 angeschlossen, der das im Ringraum zwischen dem Elektrodenstab 147 und dem Gehäuserohr 139 durchfließende Wasser einem elektrischen Wechselfeld aussetzt. Der Generator 149 erzeugt periodisch Niederspannungsimpulse von einigen Volt mit einer Impulsfolgefrequenz zwischen etwa 10 bis 20 KHz. Kunststoffkappen 151, die gegebenenfalls einteilig mit den Isolierscheiben 145 ausgebildet sein können, decken die Enden des Gehäuserohrs 139 nach außen hin dicht ab.

Fig. 2 zeigt schematisch eine Variante, die ebenfalls zur Aufbereitung von Wasser geeignet ist. Die Vorrichtung umfaßt in Strömungsrichtung 161 des Wassers hintereinandergeschaltet ein Magnetgerät 163 mit einem in einer Durchflußkammer 165 angeordneten Magnet 167 sowie strömungsabwärts des Magnetgeräts 163 ein Gerät 169, welches in einer Durchflußkammer 171 das Wasser einem von einer Elektrodenanordnung 173 erzeugten elektrischen Feld aussetzt. Die Elektrodenanordnung 173 ist mit einem Impulsgenerator 175, ähnlich den bereits vorstehend erläuterten Impulsgeneratoren verbunden. Der Hintereinanderschaltung der Geräte 163, 169 ist im Strömungsweg nachfolgend ein Partikelfilter 177 angeordnet, dessen Filterelement 179 den von den Geräten 163, 169 in seiner Struktur veränderten Kalkanteil des Wassers zumindest teilweise abfiltriert. Das Filter 177 erlaubt es, den Kalkanteil des Wassers auf gewünschte Werte einzustellen. Das Partikelfilter 177 kann bei den anhand der Fig. 1 erläuterten Vorrichtungen zusätzlich vorgesehen sein.

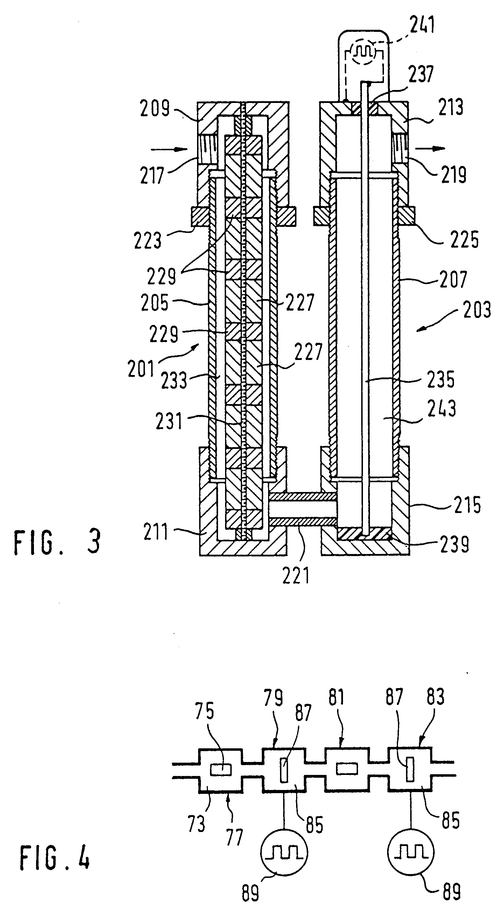

Fig. 3 zeigt eine Variante der Vorrichtung aus Fig. 1. Die Vorrichtung umfaßt ein das Wasser einem magnetischen Feld aussetzendes Magnetgerät 201, das zu einer Baueinheit mit einem im Strömungsweg des Wassers nachfolgenden, das Wasser einem elektrischen Feld aussetzenden Gerät 203 zu einer Baueinheit verbunden ist. Beide Geräte 201, 203 haben Gehäuserohre 205 bzw. 207, auf deren Enden Gehäusekappen 209, 211 bzw. 213, 215 aufgeschraubt sind. Die Gehäuserohre 205, 207 sind achsparallel nebeneinander angeordnet, wobei die einander benachbarten Kappen 209, 213 eine Zuflußöffnung 217 bzw. eine Abflußöffnung 219 enthalten und die Kappen 211, 215 mittels eines Rohrstücks 221, welches eine Abflußöffnung der Kappe 211 mit einer Zuflußöffnung der Kappe 215 verbindet, zu einer Baueinheit vereinigt sind. Während die Gehäuserohre 205, 207 in die Kappen 211, 215 fest eingeschraubt sind, sind die Kappen 209, 213 relativ zum Gehäuserohr 205 bzw. 207 verdrehbar und durch eine Kontermutter 223 bzw. 225 feststellbar. Die Zufluß- bzw. Abflußöffnungen 217, 219 lassen sich auf diese Weise entsprechend der jeweiligen Einbausituation gegeneinander verdrehen.

Das Magnetgerät 201 enthält, ähnlich der Vorrichtung nach Fig. 1, mehrere Permanentmagnete 227, die in Achsrichtung des Gehäuserohrs 205 nebeneinander mit abwechselnder Polarität zwischen je zwei Polscheiben 229 auf einer Gewindestange 231 eingespannt sind. Die Permanentmagnete 227 und Polscheiben 229 begrenzen zwischen sich und dem Gehäuserohr 205 einen Durchflußraum 233, in welchem das an der Zuflußöffnung 217 zugeführte Wasser einem Magnetfeld wechselnder Polarität ausgesetzt ist.

In dem aus Metall bestehenden Gehäuserohr 207 des Geräts 203 ist koaxial ein Elektrodenstab 235 angeordnet, der im Bereich der Kappen 213, 215 in Isolierhalterungen 237, 239 gehalten ist. Im übrigen bestehen die Kappen 213, 215 ebenfalls aus Metall. An den Elektrodenstab 235 und das Gehäuserohr 207 bzw. die damit verbundenen Kappen 213 ist ein Wechselstrom-Impulsgenerator 241 angeschlossen, der das im Ringraum 243 zwischen dem Elektrodenstab 235 und dem Gehäuserohr 207 durchfließende Wasser einem elektrischen Wechselfeld aussetzt. Der Generator 241 entspricht im übrigen dem Generator 149.

Fig. 4 zeigt eine Ausgestaltung der Vorrichtung, die sich mit den vorstehend erläuterten Konstruktionen verwirklichen läßt. Die Vorrichtung umfaßt im Durchflußweg des Wassers hintereinander zunächst ein das Wasser in einem Durchflußraum 73 dem Magnetfeld eines Magnets 75 aussetzendes Magnetgerät 77, dem strömungsabwärts ein erstes, das Wasser einem elektrischen Feld aussetzendes Gerät 79 nachfolgt. Strömungsabwärts des Geräts 79 folgt ein weiteres, das Wasser einem Magnetfeld aussetzendes Magnetgerät 81, auf das weiter strömungsabwärts ein zweites, das Wasser einem elektrischen Feld aussetzendes Gerät 83 folgt. Das Magnetgerät 81 kann gleich dem Magnetgerät 77 ausgebildet sein und gegebenenfalls entfallen. Die Geräte 79, 83 sind vorzugsweise ebenfalls gleich ausgebildet und enthalten in ihrem Durchflußraum 85 schematisch bei 87 angedeutete Elektroden, an die jeweils Wechselstrom-Impulsgeneratoren 89 angeschlossen sind. Die Impulsgeneratoren 89 der Geräte 79, 83 haben unterschiedliche Impulsfrequenzen, beispielsweise Impulsfrequenzen, die sich um einen Faktor in der Größenordnung von 2 unterscheiden. Während beispielsweise der Impulsgenerator des Geräts 79 eine Frequenz von 10 bis 20 KHz hat, hat der Impulsgenerator des Geräts 83 eine Frequenz von 20 bis 40 KHz. Die Ausgangsspannung der Generatoren 89 liegt wiederum in der Größenordnung einiger Volt. Stromab des Magnetgeräts 77 können weitere das Wasser einem elektrischen Feld aussetzende Geräte vorgesehen sein, deren Impulsgeneratoren wiederum abweichende Impulsfrequenzen haben.

Die Magnetgeräte mindern bei hartem, d.h. kalkhaltigem Wasser Kalkablagerungen in den nachfolgenden wasserführenden Systemen. Bei weichem, d.h. kalkarmem Wasser kann es aufgrund der sauren Eigenschaften des Wassers zu Korrosionsschäden an den wasserführenden Systemen kommen. Um dies zu verhindern kann ist, an den Ausgang der Vorrichtung ein Durchflußbehälter angeschlossen werden, der Kalkmaterial in schüttfähiger Form enthält. Da das Magnetgerät die Lösungseigenschaften des Wassers für Kalkmaterial erhöht, wird das durch den Durchflußbehälter fließende Wasser in erhöhtem Maß mit Kalk angereichert Die Kalkanreicherung mindert die sauren Eigenschaften des Wassers. Der aus dem Kalkmaterial gelöste Kalk bildet an den Wänden des nachfolgenden wasserführenden Systems eine korrosionsmindernde Schutzschicht.

## Patentansprüche

1. Vorrichtung zur Aufbereitung von Flüssigkeiten, insbesondere von Wasser, bei welcher im Strömungsweg der Flüssigkeit in Strömungsrichtung aufeinanderfolgend mehrere Aufbereitungsgeräte angeordnet sind, von denen ein erstes Gerät (201) die Flüssigkeit einem Magnetfeld aussetzt und in Strömungsrichtung insbesondere dahinter ein zweites Gerät (203) die Flüssigkeit einem elektrischen Feld aussetzt,
dadurch gekennzeichnet,
daß das erste Gerät (201) ein an seinem einen Ende eine Zuflußöffnung (209) und an seinem anderen Ende eine Abflußöffnung aufweisendes Gehäuserohr (205) umfaßt, in welchem mehrere in Achsrichtung des Gehäuserohrs (205) in einer Reihe, insbesondere mit abwechselnder Polarität nebeneinander liegende Permanentmagnete (227) angeordnet sind, die zwischen sich oder zwischen sich und dem Gehäuserohr (205) einen Durchflußraum (233) bilden,
daß auch das zweite Gerät (203) ein rohrförmiges, an seinem einen Ende eine Zuflußöffnung und an seinem anderen Ende eine Abflußöffnung (219) aufweisendes Gehäuserohr (207) aus Metall, koaxial in dem Gehäuserohr (207) eine an Abstandisolatoren (237, 239) gehaltene, im wesentlichen stangenförmige Elektrode (235) und eine mit dem Gehäuserohr (207) und der Elektrode (235) verbundene Spannungsquelle (241) umfaßt,
und daß die Gehäuserohre (205; 207) des ersten (201) und zweiten (203) Geräts achsparallel nebeneinander angeordnet sind und mit je einer Abflußöffnung und je einer Zuflußöffnung aneinander angeschlossen und zu einer Baueinheit verbunden sind.

2. Vorrichtung nach Anspruch 1, dadurch gekennzeichnet, daß die jeweils andere Zuflußöffnung (217) bzw. Abflußöffnung (219) des ersten (201) und zweiten (203) Geräts in einer auf das Gehäuserohr (205, 207) aufgeschraubten Kappe (209, 213) vorgesehen ist.

3. Vorrichtung nach Anspruch 1 oder 2, dadurch gekennzeichnet, daß die miteinander verbundenen Zufluß- bzw. Abflußöffnungen in zu einer Baueinheit fest verbundenen Kappen (211, 215) vorgesehen sind, in die die Gehäuserohre (205, 207) insbesondere eingeschraubt sind.

4. Vorrichtung zur Aufbereitung von Flüssigkeiten, insbesondere von Wasser, bei welcher im Strömungsweg der Flüssigkeit in Strömungsrichtung aufeinanderfolgend mehrere Aufbereitungsgeräte angeordnet sind, von denen ein erstes Gerät (101) die Flüssigkeit einem Magnetfeld aussetzt und in Strömungsrichtung insbesondere dahinter ein zweites Gerät (103) die Flüssigkeit einem elektrischen Feld aussetzt,
dadurch gekennzeichnet,
daß das erste Gerät (101) einen rohrförmigen, an seinem einen Ende eine Zuflußöffnung aufweisenden und an seinem anderen Ende geschlossenen Gehäusetopf (117), ein im wesentlichen gleichachsig in den Gehäusetopf (117) hineinragendes und zusammen mit diesem einen ersten Durchflußringraum (135) bildendes Labyrinthrohr (127), welches der Zuflußöffnung benachbart eine Abflußöffnung (119) bildet und axial gegenüberliegend zum Gehäusetopf (117) geöffnet ist und mehrere innerhalb des Labyrinthrohrs (127) in dessen Achsrichtung in einer Reihe mit abwechselnder Polarität angeordnete Permanentmagnete (129) umfaßt, die zwischen sich und dem Labyrinthrohr (127) einen zweiten Durchflußringraum (137) bilden und
daß das zweite Gerät (103) ein rohrförmiges_{,} an seinem einen Ende eine Zuflußöffnung (141) und an seinem anderen Ende eine Abflußöffnung (143) aufweisendes Gehäuserohr aus Metall, koaxial in dem Gehäuserohr (139) eine an Abstandisolatoren (145) gehaltene, im wesentlichen stangenförmige Elektrode (147) und eine mit dem Gehäuserohr (139) und der Elektrode (147) verbundene Spannungsquelle (149) umfaßt.

5. Vorrichtung nach Anspruch 4, dadurch gekennzeichnet, daß die Permanentmagnete (129) in einem im wesentlichen gleichachsig zum Labyrinthrohr (127) verlaufenden Schutzrohr (133) angeordnet sind und daß der zweite Durchflußringraum (137) zwischen dem Schutzrohr (133) und dem Labyrinthrohr (127) gelegen ist.

6. Vorrichtung nach einem der Ansprüche 1 bis 5, dadurch gekennzeichnet, daß das zweite Gerät (79, 83; 103; 203) einen an die Elektrodenanordnung (87; 147; 235) angeschlossenen, periodische Spannungsimpulse erzeugenden, elektrischen Impulsgenerator (89; 149; 241), insbesondere Wechselstrom-Impulsgenerator, aufweist.

7. Vorrichtung nach Anspruch 6, dadurch gekennzeichnet, daß die Impulsfolgefrequenz größer als 1 kHz, insbesondere größer als 10 kHz, ist.

8. Vorrichtung nach Anspruch 6 oder 7, dadurch gekennzeichnet, daß mehrere zweite Geräte (79, 83) unterschiedlicher Impulsfrequenz in Strömungsrichtung hintereinander im Strömungsweg der Flüssigkeit angeordnet sind.

9. Vorrichtung nach Anspruch 8, dadurch gekennzeichnet, daß zwischen zweiten, im Strömungsweg der Flüssigkeit aufeinanderfolgenden Geräten (79, 83) weitere erste Geräte (81) im Strömungsweg der Flüssigkeit angeordnet sind.

10. Vorrichtung nach einem der Ansprüche 1 bis 9, dadurch gekennzeichnet, daß an den Ausgangsanschluß (35) ein Durchflußbehälter (53) angeschlossen ist, der im Strömungsweg des Wassers Kalkmaterial in schüttfähiger Form enthält.

11. Vorrichtung nach einem der Ansprüche 1 bis 10, dadurch gekennzeichnet, daß ein drittes Gerät strömungsabwärts des ersten Geräts (163) und insbesondere strömungsabwärts der Hintereinanderschaltung von erstem Gerät (163) und zweitem Gerät (169) angeordnet ist und als die Flüssigkeit von darin enthaltenen Partikeln reinigendes Filter (177) ausgebildet ist.

## Claims

1. Apparatus for processing liquids, in particular water, in which several processing devices are arranged sequentially in the direction of flow of the liquid of which a first device (201) exposes the liquid to a magnetic field and behind this in the direction of flow a second device (203) exposes the liquid to an electrical field,
characterised in that
the first device (201) comprises a tubular housing (205) having an inflow opening (209) at one end and an outflow opening at the other end, in which several permanent magnets (227) lying adjacent to one another are arranged in a row in the axial direction of the housing (205) with alternate polarity, to form a flow chamber (233) between themselves or between themselves and the housing (205), the second device (203) also comprises a tubular housing (207) made of metal having an inflow opening at one end and an outflow opening (219) at the other end, a rod-shaped electrode (235) supported on spacing isolators (237, 239) coaxially in the housing (207) and a voltage source (241) connected to the housing (207) and the electrode (235), and the housings (205; 207) of the first (201) and second (203) devices are arranged axially parallel and adjacent to one another, one outflow opening and one inflow opening of the housings are connected to one another and the housings are joined together as a constructional unit.

2. Apparatus according to claim 1, characterised in that the respective other inflow opening (217) and outflow opening (219) of the first (201) and second (203) devices is provided in a cap (209, 213) screwed onto the housing (205, 207).

3. Apparatus according to claim 1 or 2, characterised in that the inflow and outflow openings are provided in caps (211, 215) joined together in the constructional unit, into which the housings (205, 207) are screwed.

4. Apparatus for processing liquids, in particular water, in which several processing devices are arranged sequentially in the direction of flow of the liquid of which a first device (101) exposes the liquid to a magnetic field and a second device (103) behind this in the direction of flow exposes the liquid to an electrical field,
characterised in that
the first device (101) comprises a tubular housing (117) having an inflow opening at one end and being closed at the other end, a labyrinth tube (127) projecting coaxially into the housing (117) and forming a first annular flow chamber (135) therewith, the tube (127) having an outflow opening (119) adjacent the inflow opening of the housing (117) and axially opposite to the closed end of the housing and several permanent magnets (129) are arranged inside the labyrinth tube (127) in an axial row with alternate polarity, the permanent magnets forming with the labyrinth tube (127) a second annular flow chamber (137) and the second device (103) comprises a tubular housing (139) made of metal having an inflow opening (141) at one end and an outflow opening (143) at the other end, a rod-shaped electrode (147) supported on spacing isolators (145) coaxially in the housing (139) and a voltage source (149) connected to the housing (139) and the electrode (147),

5. Apparatus according to claim 4, characterised in that the permanent magnets (129) are arranged in a protective tube (133) extending along the same axis as the labyrinth tube (127) and the second chamber (137) is located between the protective tube (133) and the labyrinth tube (127).

6. Apparatus according to one of claims 1 to 5, characterised in that the second device (79, 83; 103; 203) has an electrical pulse generator (89, 149, 241), in particular an alternating current pulse generator, which is connected to the electrode arrangement (87; 147; 235) and produces periodic voltage pulses.

7. Apparatus according to claim 6, characterised in that the pulse repetition frequency is greater than 1 kHz, and more particularly is greater than 10 kHz.

8. Apparatus according to claim 6 or 7, characterised in that several additional second devices (79, 83) with different pulse frequencies are arranged one behind another in the direction of the flow path of the liquid.

9. Apparatus according to claim 8, characterised in that additional first devices (81) are arranged between these additional second devices (79, 83) disposed sequentially in the flow path of the liquid.

10. Apparatus according to one of claims 1 to 9, characterised in that a container (53) which contains lime material in pourable form is connected to an exit (35) of the apparatus in the flow path of the water.

11. Apparatus according to one of claims 1 to 10, characterised in that a third device is arranged downstream from the first device (163) and in particular downstream from the cascade connection of the first device (163) and second device (169) and the third device is designed as a filter (177) for cleaning the liquid of particles contained therein.

## Revendications

1. Dispositif pour le traitement de liquides, en particulier d'eau, dans lequel, sur la trajectoire d'écoulement du liquide, plusieurs appareils de traitement sont placés les uns à la suite des autres dans la direction d'écoulement, parmi lesquels un premier appareil (201) expose le liquide à un champ magnétique et, dans la direction d'écoulement, en particulier derrière celui-ci, un deuxième appareil (203) expose le liquide à un champ électrique, caractérise en ce que le premier appareil (201) comprend un tube formant boîtier (205) présentant à une extrémité une ouverture d'arrivée (209) et à l'autre extrémité une ouverture de sortie, tube dans lequel sont placés plusieurs aimants permanents (227) placés en série les uns à côté des autres dans la direction axiale du tube formant boîtier (205), en particulier avec des polarités alternées, qui forment entre eux, ou entre eux et le tube formant boîtier (205), une chambre d'écoulement (233), en ce qu'également le deuxième appareil (203) comprend un tube formant boîtier (207) en métal, en forme de tube, présentant à un extrémité une ouverture d'entrée et à l'autre extrémité une ouverture de sortie (219), une électrode (235) pour l'essentiel en forme de tige, tenue sur des isolateurs d'espacement (237, 239) et en position coaxiale dans le tube formant boîtier (207), et une source de tension (241) reliée au tube formant boîtier (207) et à l'électrode (235), et en ce que les tubes formant boîtier (205; 207) du premier (201) et du deuxième (203) appareils sont placés l'un à côté de l'autre avec leurs axes parallèles et sont raccordés l'un à l'autre par une ouverture de sortie et une ouverture d'entrée respectives, et sont reliés en une unité constructive.

2. Dispositif selon la revendication 1, caractérisé en ce que l'autre ouverture d'entrée (217) ou de sortie (219) respective du premier (201) et du deuxième (203) appareils est prévue dans un capuchon (209, 213) vissé sur le tube formant boîtier (205, 207).

3. Dispositif selon la revendication 1 ou 2, caractérisé en ce que les ouvertures d'entrée et de sortie reliées l'une à l'autre sont prévues dans des capuchons (211, 215) reliés solidement en une unité constructive et dans lesquels les tubes formant boîtiers (205, 207) sont en particulier vissés.

4. Dispositif pour le traitement de liquides, en particulier de l'eau, dans lequel, sur la trajectoire d'écoulement du liquide, plusieurs appareils de traitement sont placés les uns à la suite des autres dans la direction d'écoulement, parmi lesquels un premier appareil (101) expose le liquide à un champ magnétique et, dans la direction d'écoulement, en particulier derrière celui-ci, un deuxième appareil (103) expose le liquide à un champ électrique, caractérisé en ce que le premier appareil (101) comprend un pot formant boîtier (117) présentant à une extrémité une ouverture d'entrée et fermé à son autre extrémité, un tube labyrinthe (127) pour l'essentiel dépassant de manière coaxiale dans le pot formant boîtier (117) et formant avec celui-ci une première chambre d'écoulement annulaire (135), tube qui forme à proximité de l'ouverture d'entrée une ouverture de sortie (119) et est ouvert à l'opposé, dans le sens axial, du pot formant boîtier (117), et plusieurs aimants permanents (129) disposés à l'intérieur du tube labyrinthe (127) dans la direction axiale de celui-ci, en une série à polarités alternées, et qui forment entre eux et le tube labyrinthe (127) une deuxième chambre d'écoulement annulaire (137), et en ce que le deuxième appareil (103) comprend un tube formant boîtier en métal, en forme de tube, présentant à une extrémité une ouverture d'entrée (141) et à l'autre extrémité une ouverture de sortie (143), une électrode (147) pour l'essentiel en forme de tige, tenue sur des isolateurs d'espacement (145) et en position coaxiale dans le tube formant boîtier (139), et une source de tension (149) reliée au tube formant boîtier (139) et à l'électrode (147).

5. Dispositif selon la revendication 4, caractérisé en ce que las aimants permanents (129) sont placés dans un tube protecteur (133) s'étendant pour l'essentiel de manière coaxiale au tube labyrinthe (127), et en ce que la deuxième chambre d'écoulement annulaire (137) est située entre la tube protecteur (133) et le tube labyrinthe (127).

6. Dispositif selon l'une des revendications 1 à 5, caractérisé en ce que le deuxième appareil (79, 83; 103; 203) présente un générateur d'impulsions (89; 149; 241) électrique, en particulier un générateur d'impulsions en courant alternatif, produisant des impulsions de tension périodiques et raccordé au dispositif à électrode (87; 147; 235).

7. Dispositif selon la revendication 6, caractérisé en ce que la fréquence de succession des impulsions est supérieure à 1 kHz, en particulier supérieure à 10 kHz.

8. Dispositif selon la revendication 6 ou 7, caractérisé en ce que plusieurs deuxièmes appareils (79, 83) de différentes fréquences d'impulsion sont disposés les uns derrière les autres, dans la direction d'écoulement, sur la trajectoire d'écoulement du liquide.

9. Dispositif selon la revendication 8, caractérisé en ce que d'autres premiers appareils (81) sont placés sur la trajectoire d'écoulement du liquide, entre des deuxièmes appareils (79, 83) se suivant sur la trajectoire d'écoulement du liquide.

10. Dispositif selon l'une des revendications 1 à 9, caractérisé en ce que, sur le raccord de sortie (35), est raccordé un récipient à écoulement libre (53) qui contient un matériau à base de chaux en vrac sur la trajectoire d'écoulement de l'eau.

11. Dispositif selon l'une des revendications 1 à 10, caractérisé en ce qu'un troisième appareil est placé en aval du premier appareil (163) et en particulier en aval de la mise en série successive du premier appareil (163) et du deuxième appareil (169), et est constitué d'un filtre (177) purifiant le liquide des particules qui y sont contenues.
